# EUROPÄISCHE PATENTSCHRIFT

(11) **EP 3 168 966 B1**
(45) Veröffentlichungstag und Bekanntmachung des Hinweises auf die Patenterteilung: **06.05.2020**
(21) Anmeldenummer: 16195765.9
(22) Anmeldetag: 26.10.2016
(51) Int. Cl.: H02K 5/20, H02K 5/24, H02K 9/19, H02K 5/18

(54) **STATORANORDNUNG EINER ELEKTROMASCHINE**
STATOR ASSEMBLY FOR ELECTRIC MACHINE
ASSEMBLAGE STATORIQUE D'UNE MACHINE ÉLECTRIQUE

(30) Priorität: 16.11.2015 DE 102015119797
(43) Veröffentlichungstag der Anmeldung: 17.05.2017
(73) Patentinhaber: VOLKSWAGEN AKTIENGESELLSCHAFT, 38440 Wolfsburg (DE)
(72) Erfinder: ESTORF, Dr. Malte, 38162 Cremlingen (DE); UMLAND, Lars, 38154 Königslutter am Elm (DE); LÜCK, Peter, 38550 Isenbütte (DE)
(74) Vertreter: Vogel, Andreas

(56) Entgegenhaltungen:
- DE-A1- 10 019 914
- DE-A1-102011 076 532
- DE-A1-102011 088 477
- DE-A1-102011 108 066
- DE-A1-102012 003 101
- GB-A- 2 293 695
- US-A1- 2007 292 261
- US-A1- 2014 239 754

## Beschreibung

Die Erfindung betrifft eine Statoranordnung für eine elektrische Maschine nach dem Oberbegriff des Anspruches 1. Ferner betrifft die Erfindung eine entsprechende elektrische Maschine nach Anspruch 9 und ein entsprechendes Verfahren zum Optimieren einer Statoranordnung nach Anspruch 10.

Bauteile einer elektrischen Maschine, wie z. B. einer E-Maschine, eines Generators und/oder eines Startergenerators, werden durch Kräfte eines zum Antrieb erforderlichen magnetischen Feldes zu Schwingungen angeregt. Diese Schwingungen übertragen sich auf das Gehäuse, in welchem die elektrische Maschine untergebracht ist, und sind für den Benutzer akustisch wahrnehmbar. Diese Geräusche werden dabei als störend empfunden. Oft entwickelt sich dabei ein charakteristischer Pfeifton, welcher als sehr unangenehm empfunden wird.

Aus der DE 10 2011 108 066 A1 ist eine Statoraufhängung bekannt, die einen Statorträger umfasst, welcher an den axialen Enden gegenüber einem Gehäuse abgestützt ist, um Vibrationen des Gehäuses zu reduzieren. Dabei hat sich als nachteilig herausgestellt, dass die Statoraufhängung kompliziert aufgebaut ist, und dass der Statorträger aufwendig am Gehäuse montiert ist.

Aus der DE 10 2012 003101 A1 ist eine Statoranordnung bekannt, die einen Statorträger umfasst, welcher nicht als ein dünner und gerader Blechzylinder ausgeführt ist und wobei der Statorträger bei der Herstellung umgeformt werden muss.

Die DE 100 19 914 A1 offenbart eine Statoranordnung mit einem Statorträger, wobei der Statorträger nicht durch Verklemmen und Schrumpfen mit dem Gehäuse verbunden ist und wobei der Statorträger mit zusätzlichen Befestigungs-Bauteilen oder Umformen hergestellt ist.

Deswegen ist es Aufgabe der vorliegenden Erfindung, mindestens einen aus dem Stand der Technik bekannten Nachteil zumindest zum Teil zu überwinden. Insbesondere ist es Aufgabe der vorliegenden Erfindung, eine Statoranordnung für eine elektrische Maschine und eine entsprechende elektrische Maschine zur Verfügung zu stellen, welche einen einfachen Aufbau aufweisen, die einfach ausgestaltet sind, die einfach und günstig in der Herstellung sind sowie leicht zusammengebaut werden können. Außerdem ist es Aufgabe der Erfindung, ein entsprechendes Verfahren zum Optimieren einer Statoranordnung für eine elektrische Maschine bereitzustellen.

Die voranstehende Aufgabe wird durch eine Statoranordnung für eine elektrische Maschine gelöst, die mit einem Stator, einem Statorträger zur Aufnahme des Stators, und einem Gehäuse zur Aufnahme des Statorträgers ausgeführt ist, wobei der Statorträger an beiden axialen Enden den Stator in der Länge überragt, und wobei das mindestens eine Ende des Statorträgers zur einer, insbesondere vollumfänglichen, Verbindung mit dem Gehäuse ausgeführt ist.

Unter einer elektrischen Maschine kann im Sinne der Erfindung eine E-Maschine, ein Generator und/oder ein Startergenerator verstanden werden. Auch ist es im Sinne der Erfindung möglich, dass der Statorträger an beiden axialen Enden den Stator in der Länge überragt, um die Verbindung des Statorträgers mit dem Gehäuse beidseitig zu erleichtern. Außerdem ist es im Sinne der Erfindung möglich, dass eine vollumfängliche Verbindung zwischen dem Stator und dem Gehäuse realisiert wird, die einfach realisiert werden kann.

Der Erfindungsgedanke liegt dabei darin, ein separates Gehäuseteil, also den Statorträger, innerhalb eines Gehäuses vorzusehen, um die Schwingungsausbreitung vom Stator zum Gehäuse zu entkoppeln. Erfindungsgemäß ist der Statorträger als ein dünner Blechzylinder, ausgebildet. Der Erfindungsgedanke liegt ferner darin, dass ein solcher Statorträger der Länge nach bzw. in eine axiale Richtung den Stator überragt, um die nachfolgend im Detail beschriebenen Vorteile zu erreichen.

Eine solche erfindungsgemäße Ausgestaltung des Statorträgers ermöglicht es vorteilhafterweise, dass die Schwingungen ausgehend vom Stator über den dünnen und weichen Zylinder federnd aufgenommen werden. Die Enden des Statorträgers, insbesondere in Form eines Zylinders, die den Stator in axialer Richtung überragen, dienen dabei als eine federnde Verbindung zum Gehäuse, um eine Schall-Entkoppelung zwischen dem Stator und dem Gehäuse zu realisieren. Somit werden radiale Bewegungsmoden des Stators nicht auf das äußere Gehäuse übertragen, was einem verminderten Körperschalldurchgang gleichbedeutend ist. Ein großes Flächenträgheitsmoment des Zylinders sorgt trotz der radialen Flexibilität für eine wirksame Unterbindung translatorischer und rotatorischer Bewegungen zwischen dem äußeren Gehäuse und dem innen liegenden Statorträger. Die Entkopplung zwischen dem Gehäuse und dem Statorträger und eine vollumfängliche Verbindung zwischen dem Gehäuse und dem Statorträger an den axialen Enden des Statorträgers schaffen einen Hohlraum zwischen dem Gehäuse und dem Statorträger. Der Hohlraum kann dabei vorteilhafterweise dazu genutzt werden, um ein Kühlmittel, beispielsweise eine Kühlflüssigkeit, wie z. B. Öl, für die elektrische Maschine aufzunehmen. Vorteilhafterweise ist es im Sinne der Erfindung denkbar, dass der Hohlraum zwischen dem Gehäuse und dem Statorträger mit einem gewissen Anteil an Luft gefüllt sein kann, um eine effektive Schallgeschwindigkeit durch das Kühlmittel durch die anteilig vorhandene Luft herabzusetzen.

Eine solche erfindungsgemäße Ausgestaltung des Statorträgers, nämlich überragend der Stator in der Axiale, ermöglicht es außerdem vorteilhafterweise, dass die Verbindung zwischen dem Statorträger und dem Gehäuse auf eine einfache Weise hergestellt werden kann, bevorzugt ohne zusätzliche Befestigungs-Bauteile oder Umformen von Statorträger, z. B. durch Kleben, und/oder durch Verklemmen, und/oder durch Schrumpfen-Lassen des Gehäuses am Statorträger, mit und/oder ohne Kleber dazwischen. Dadurch kann der Aufbau und der Zusammenbau der Statoranordnung und einer entsprechenden elektrischen Maschine erheblich vereinfacht werden.

Zudem ermöglicht eine erfindungsgemäße Ausgestaltung des Statorträgers vorteilhafterweise eine einfache und günstige Herstellung des Statorträgers selbst und indirekt auch des Gehäuses, weil das Gehäuse mithin kein massiver und dicker Körper sein muss. Hierbei kann der Statorträger auf eine einfache und günstige Weise, sogar in Massenproduktion, beispielsweise durch Tiefziehen, Strangpressen oder Ausrollen hergestellt werden.

Erfindungsgemäß ist ferner vorgesehen, dass der Statorträger als ein dünnwandiger Zylinder, insbesondere im Vergleich zum Durchmesser des Statorträgers, ausgebildet ist. Bei einem dünnwandigen Zylinder ist es denkbar, dass die Dicke der Zylinderwand nur einen geringen Teil des Durchmessers des Statorträgers betragen kann, welcher je nach dem verwendeten Material und je nach der gewünschten Schallübertragung zwischen 1/40 und 1/300, bevorzugt zwischen 1/60 und 1/200 liegen oder beispielsweise 1/100 betragen kann. Dabei ist es vorteilhaft, dass somit Materialkosten gespart werden können, da keine massiven Bauteile benötigt werden. Auch ist es von Vorteil, dass dadurch der Bauraum der elektrischen Maschine klein gehalten werden kann. Dadurch wird auch eine einfache Herstellung des Statorträgers ermöglicht.

Zudem ist es im Rahmen der Erfindung denkbar, dass der Statorträger aus Stahl oder Aluminium, insbesondere durch Tiefziehen, Strangpressen oder Ausrollen, hergestellt sein kann. Hierbei ist es vorteilhaft, dass günstige Materialien und günstige Herstellverfahren genutzt werden können. Zudem ist es vorteilhaft, dass solche einfache aber schnelle Herstellungsverfahren Bauteile mit höchster Präzision bereitstellen können. Folglich kann eine gewünschte bzw. optimal geeignete Dicke des Statorträger für eine bestimmte Statoranordnung einfach, schnell und ohne großen Kostenaufwand bereitgestellt werden.

Weiterhin ist es im Rahmen der Erfindung vorteilhafterweise möglich, dass das Gehäuse ebenfalls als ein dünnwandiger Zylinder, insbesondere im Vergleich zum Durchmesser des Gehäuses, ausgebildet sein kann. Hierbei ist es denkbar, dass das Gehäuse aus Aluminium hergestellt sein kann. Bei einem dünnwandigen Zylinder ist es auch hier denkbar, dass die Dicke der Zylinderwand nur einen geringen Teil des Durchmessers des Gehäuses betragen kann, welcher für Aluminium je nach der gewünschten Schallübertragung zwischen 1/80 und 1/40 liegen oder beispielsweise 1/60 betragen kann. Somit können Materialkosten noch weiter gesenkt und der Bauraum der elektrischen Maschine reduziert werden. Auch hier kann der Aufwand bei der Herstellung der elektrischen Maschine deutlich vermindert werden.

Des Weiteren ist es gemäß der Erfindung vorgesehen, dass der Statorträger als ein, insbesondere ausschließlich, gerader Kreiszylinder ausgeführt sein kann. Mithin kann der Vorteil erreicht werden, dass die Herstellung des Statorträgers noch weiter erleichtert werden kann. Hierbei können die Herstellungszeit und die Anzahl der Herstellungsschritte erheblich reduziert werden, sogar bis auf nur einen Herstellungsschritt, wie z. B. beim Strangpressen.

Ebenfalls ist es denkbar, dass der Statorträger mindestens ein, beispielsweise abgewinkeltes, Kragenelement aufweisen kann, welches zum Verbinden des Statorträgers mit dem Gehäuse dienen kann. Hierbei kann es vorteilhaft sein, dass das Kragenelement durch ein einfaches Verklemmen zwischen zwei Bauteilen des Gehäuses mit dem Gehäuse verbunden werden kann. Auch ist es denkbar, dass das Kragenelement eine axiale Verlängerung des Statorträgers sein kann, beispielsweise mit einer unterschiedlichen Dicke als der Statorträger, die zum Verklemmen mit dem Gehäuse angepasst sein kann.

Zudem ist es denkbar, dass der Statorträger mindestens ein, beispielsweise kragenförmiges, Dichtungselement zumindest an einem axialen Ende aufweisen kann, um einen Hohlraum zwischen dem Statorträger und dem Gehäuse abzudichten. Hierbei kann das Dichtungselement in Form eines Dichtungsringes ausgebildet sein. Somit kann der Vorteil erreicht werden, dass der Hohlraum zur Aufnahme von Kühlmittel, ohne Auslauf, verwendet werden kann.

Weiterhin kann es gemäß der Erfindung vorgesehen sein, dass das mindestens eine axiale Ende des Statorträgers und das Gehäuse durch Verklemmen, durch Kleben und/oder Schrumpfen miteinander verbunden sein können. Solche Verbindungsverfahren sind einfach, kostengünstig und schnell ausführbar. Der Aufbau bzw. die Konstruktion oder Ausgestaltung der Statoranordnung kann somit vereinfacht werden, wobei auf jegliche zusätzliche Verbindungsmittel, wie z. B. Schrauben, Klemm- oder Klipselemente, bzw. separate Befestigungsbauteile, wie z. B. Spannringe oder dergleichen, verzichtet werden kann. Der Zusammenbau der Statoranordnung kann mithin ebenfalls vereinfacht werden.

Ferner kann es vorteilhaft sein, wenn zwischen dem Statorträger und dem Gehäuse ein, insbesondere abgeschlossener, Hohlraum für ein Kühlmittel vorgesehen sein kann. Dadurch kann die Funktionalität der Statoranordnung verbessert werden, indem der Hohlraum für die Kühlung ausgenutzt werden kann. Hierbei kann es vorteilhaft sein, dass alleine durch die erfindungsgemäße Verbindung des Statorträgers an den axialen Enden zum Gehäuse eine Abdichtung des Hohlraumes nach sich ziehen kann. Zudem oder stattdessen kann mindestens ein zusätzliches Dichtungselement an einem axialen Ende des Statorträgers vorgesehen sein.

Nach einem Vorteil der Erfindung kann der Hohlraum zwischen dem Statorträger und dem Gehäuse, zumindest anteilig, mit Luft gefüllt sein. Hierbei ist es von Vorteil, dass die Schallgeschwindigkeit eines den Hohlraum durchströmenden Kühlmittels durch die anteilig vorhandene Luft reduziert werden kann. Folglich können Schwingungen ausgehend vom Stator zuerst durch den Statorträger und anschließend durch die Luft abgedämpft werden. Somit kann die Schallausbreitung durch den Hohlraum zum Gehäuse vermindert werden.

Ferner kann es im Rahmen der Erfindung vorgesehen sein, dass der Statorträger zumindest an einem axialen Ende mindestens ein Schalldämmelement aufweisen kann, um die Ausbreitung von Schallgeräuschen vom Stator zum Gehäuse zu reduzieren. Hierbei ist es denkbar, dass das mindestens eine Schalldämmelement in Form eines Loches, beispielsweise eines Stanzloches, im Statorträger ausgebildet sein kann. Ein solches Schalldämmelement ist sehr einfach und kann ohne viel Aufwand, beispielsweise durch Stanzen, im Statorträger ausgebildet werden. Ein solches einfaches Schalldämmelement dient vorteilhafterweise dazu, dass die federnde Übertragung von Schwingungen vom Statorträger zum Gehäuse im allgemeinen reduziert und an den Stellen des Loches gar unterbunden werden kann.

Weiterhin ist es gemäß der Erfindung denkbar, dass unterschiedliche Arten von Schalldämmelementen eingesetzt werden können, wie beispielsweise elastische Ringe und/oder Noppen zwischen dem Statorträger und dem Gehäuse. Auch ist es denkbar, dass die Dicke des Statorträgers variiert werden kann, um die Schwingungen vorteilhaft zu leiten. Zudem ist es denkbar, dass an den Enden des Statorträgers der Statorträger verstärkt und/oder verjüngt werden kann, um eine leichtere Verbindung mit dem Gehäuse sicherzustellen und/oder eine Ausbreitung von Schwingungen zu reduzieren.

Ferner kann es im Rahmen der Erfindung vorgesehen sein, dass der Statorträger zumindest an einem axialen Ende eine Vielzahl von Schalldämmelementen, insbesondere eine Vielzahl von Löchern, aufweisen kann. Hierbei ist es vorteilhaft, dass die Dämmwirkung von Schwingungen deutlich erhöht werden kann. Zudem ist es denkbar, dass die Vielzahl von Schalldämmelementen oder Löchern ringförmig und/oder kragenförmig angeordnet sein kann. Hierbei ist es vorteilhaft, dass dadurch translatorische und rotatorische Schwingungen des Statorträgers optimal durch die Schalldämmelemente abgefangen und reduziert werden können. Ferner ist es denkbar, dass die Vielzahl von Schalldämmelementen, die ringförmig bzw. kragenförmig angeordnet sein können, zudem doppelreihig oder sogar mehrreihig angeordnet sein können, um die Dämmwirkung zu verstärken.

Des Weiteren kann es im Rahmen der Erfindung vorgesehen sein, dass das mindestens eine Schalldämmelement oder die Vielzahl von Schalldämmelementen zwischen einer Verbindungsstelle des Statorträgers zum Gehäuse und einem Ende des Stators angeordnet sein können. Somit kann vorteilhafterweise sichergestellt werden, dass die Schwingungen ausgehend vom Stator durch den Statorträger radial zuverlässig abgefangen werden, und dass gleichzeitig die axiale Weiterleitung von Schwingungen über die Verbindungsstelle des Statorträgers zum Gehäuse gemindert wird.

Ferner wird die erfindungsgemäße Aufgabe durch eine elektrische Maschine mit einer Statoranordnung gelöst, die oben beschrieben wurde. Dabei werden die gleichen Vorteile erreicht, die auch im Zusammenhang mit der erfindungsgemäßen Statoranordnung erwähnt wurden. Zur Vermeidung von Wiederholungen wird hierbei vollumfänglich darauf Bezug genommen.

Des Weiteren wird die erfindungsgemäße Aufgabe durch ein Verfahren zum Optimieren einer Statoranordnung für eine elektrische Maschine, die oben beschrieben wurde, gelöst, wobei die Statoranordnung einen Statorträger zur Aufnahme des Stators aufweist, umfassend folgende Schritte:
- Berechnen einer Kraftanregung durch Magnetdruck im Statorträger,
- Berechnen einer Kraftanregung im Gehäuse,
- Berechnen von Eigenfrequenzen der, insbesondere über ein Kühlmittel, gekoppelten Statoranordnung,
- Berechnen einer Dicke des Statorträgers und/oder einer Dicke des Gehäuses für eine gewünschte Schallübertragung vom Statorträger zum Gehäuse.

Unter dem Berechnen einer Kraftanregung durch Magnetdruck im Statorträger kann dabei ein Berechnen des Druckfeldes der Oberfläche des Stators in Abhängigkeit von einer bekannten Magnetkraft bzw. Magnetkraftverteilung in der elektrischen Maschine verstanden werden, da die Ströme in jeweiligen Spulen in Stator und Rotor bekannt sind. Hierbei ist es denkbar, dass hierzu eine Bewegungsgleichung der Oberfläche des Stators aufgestellt werden kann. Unter dem Berechnen einer Kraftanregung im Gehäuse kann ebenfalls ein Berechnen des Druckfeldes der Oberfläche des Gehäuses verstanden werden, wobei die dämpfende Einwirkung des Hohlraumes mit gegebenenfalls darin befindlichen Kühlmittels berücksichtigt werden kann. Hierbei ist es denkbar, dass hierzu eine Wellengleichung des Geschwindigkeitspotentials des sich ausbreitenden Schalls aufgestellt werden kann. Die Schallübertragung vom Statorträger zum Gehäuse kann dabei aus der Kraftanregung des Gehäuses im Verhältnis zur Kraftanregung im Statorträger berechnet werden. Alle Berechnungen können zunächst für beispielhafte geometrische Abmaße des Statorträgers und des Gehäuses durchgeführt werden, wobei anschließend durch Variieren dieser Abmaße die passenden Abmaße für eine gewünschte Schallübertragung vom Stator zum Gehäuse ermittelt werden können.

Somit können vorteilhafterweise unterschiedliche Statoranordnungen optimiert werden. Mithin kann sichergestellt werden, dass verschiedene elektrische Maschinen stets zuverlässig und sicher, aber auch günstig und schnell sowie mit verminderten unangenehmen akustischen Effekten für den Benutzer bereitgestellt werden können.

Weitere, die Erfindung verbessernde Maßnahmen werden nachstehend mit der Beschreibung der bevorzugten Ausführungsbeispiele der Erfindung anhand der Figuren näher dargestellt. Dabei können die in den Ansprüchen und in der Beschreibung erwähnten Merkmale jeweils einzeln für sich oder in beliebiger Kombination erfindungswesentlich sein. Dabei ist zu beachten, dass die Figuren nur beschreibenden Charakter haben und nicht dazu gedacht sind, die Erfindung in irgendeiner Form einzuschränken. Nur die Ansprüche definieren und begrenzen die Erfindung.

Es zeigen:
- Fig. 1: eine schematische Darstellung einer erfindungsgemäßen Statoranordnung,
- Fig. 2: eine schematische Darstellung einer weiteren Ausführungsform der erfindungsgemäßen Statoranordnung, und
- Fig. 3: eine Schnittdarstellung der erfindungsgemäßen Statoranordnung.

In den unterschiedlichen Figuren sind gleiche Teile stets mit denselben Bezugszeichen versehen, weshalb diese in der Regel nur einmal beschrieben werden.

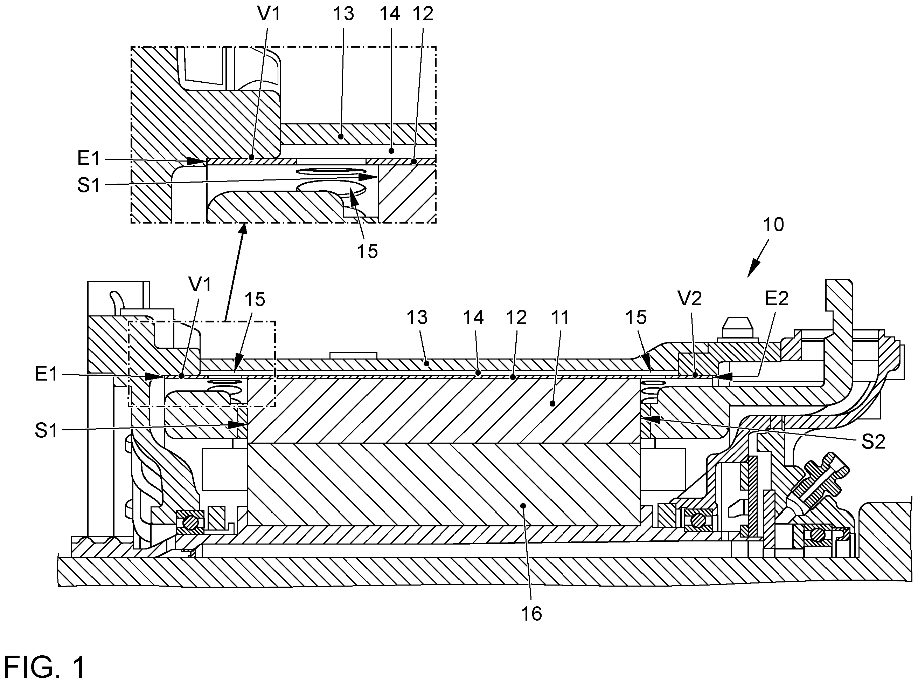

Die Figur 1 zeigt eine erfindungsgemäße Statoranordnung 10 für eine elektrische Maschine. Die elektrische Maschine ist dabei als eine E-Maschine abgebildet, die elektrische Energie, insbesondere Strom, in mechanische Energie umwandeln kann. Hierzu weist die elektrische Maschine einen Stator 11 und einen Rotor 16 auf. Dabei wird die Kraft, die von einem Magnetfeld auf stromdurchflossene Leiter einer Spule ausgeübt wird, in Bewegung umgesetzt.

Erfindungsgemäß ist die Statoranordnung 10 mit einem Statorträger 12 zur Aufnahme des Stators 11 und einem Gehäuse 13 zur Aufnahme des Statorträgers 12 ausgeführt. Der erfindungsgemäße Statorträger 12 überragt dabei axial den Stator 11. Wie in der Figur 1 zu sehen ist, überragt dabei jeweils ein axiales Ende E1, E2 des Statorträgers 12 ein jeweiliges axiales Ende S1, S2 des Stators 11 in der Länge.

Diese verlängerten axialen Enden E1, E2 des Statorträgers 12, insbesondere im Vergleich zu den axialen Enden S1, S2 des Stators 11, dienen erfindungsgemäß zum Verbinden V1, V2 des Statorträgers 12 mit dem Gehäuse 13. Hierbei kann der Statorträger 12 einfach mittels einer geklebten Schrumpfverbindung V1 vollumfänglichen mit dem Gehäuse 13 verbunden werden, wie es in der vergrößerten Darstellung der Figur 1 oben links zu erkennen ist.

Der erfindungsgemäße Statorträger 12 ist vorteilhafterweise als ein separates Gehäuseteil ausgebildet, welches dazu vorgesehen ist, die Schwingungsausbreitung vom Stator 11 zum Gehäuse 13 zu reduzieren. Anders als in herkömmlichen Statoranordnungen mit einem massiven Gehäuse ist der erfindungsgemäße Statorträger 12 ein dünner Zylinder, beispielsweise ein dünner Blechzylinder.

Der dünne und aufgrund eines gewählten Materials, wie z. B. Stahl, relativ weiche bzw. nachgiebige Statorträger 12 sorgt dafür, dass Schwingungen ausgehend vom Stator 11 im Statorträger 12 federnd aufgenommen und abgeschwächt werden, bevor sie durch die Verbindungsstellen V1, V2 an das Gehäuse 13, bevorzugt nur in eine axiale Richtung, weitergeleitet werden. Die axialen Enden E1, E2 des Statorträgers 12 dienen dabei als eine federnde Verbindung V1, V2 zum Gehäuse 13. Somit werden radiale Bewegungsmoden des Stators 11 gar nicht auf das äußere Gehäuse 13 übertragen. Ein großes Flächenträgheitsmoment des Statorträgers 12 sorgt trotz seiner radialen Flexibilität für eine wirksame Unterbindung translatorischer und rotatorischer Bewegungen zwischen dem Gehäuse 13 und dem Statorträger 12.

Das Gehäuse 13 und der Statorträger 12, die umfangseitig an Ihren Enden miteinander verbunden sind, bilden dazwischen einen Hohlraum 14, welcher dazu genutzt werden kann, um ein Kühlmittel, beispielsweise in Form eine Kühlflüssigkeit, wie z. B. Öl, zur Kühlung des Stators 11 aufzunehmen. Die Erfindung schlägt dabei weiterhin vor, dass der Hohlraum 14 zwischen dem Gehäuse 13 und dem Statorträger 12 zumindest anteilig zur Kühlflüssigkeit mit Luft gefüllt sein kann, um die Ausbreitung des Schalls durch das Kühlmittel durch die anteilig vorhandene Luft zu vermindern.

Wie weiterhin in der vergrößerten Ansicht der Figur 1 dargestellt ist, ist die verlängerte Ausgestaltung des Statorträgers 12 an mindestens einem Ende E1 seiner axialen Enden E1, E2 vorteilhaft für die Verbindung V1 mit dem Gehäuse 13, da das entsprechende Ende E1 des Statorträgers 12 einfach innerhalb des hohlen, ebenfalls zylinderförmigen Gehäuses 13 verspannt und/oder verklebt werden kann. Hierbei ist es vorteilhaft, dass keine zusätzlichen Befestigungs-Bauteile erforderlich sind, um die Verbindung V1 herzustellen. Der Aufbau der erfindungsgemäßen Statoranordnung 10 kann dadurch erheblich vereinfacht werden.

Zudem ist aus der Figur 1 ersichtlich, dass der Statorträger 12 eine einfache Form eines geraden Kreiszylinders aufweist. Ein solcher gerade Kreiszylinder kann einfach und günstig hergestellt werden, beispielsweise durch Tiefziehen, Strangpressen oder Ausrollen. Auch wird dadurch das erfindungsgemäße Gehäuse 13 dünner und einfacher in der Herstellung, da gemäß der Erfindung die Notwendigkeit entfällt, das Gehäuse 13 massiv auszugestalten, um Schwingungen ausgehend vom Stator 11 zu absorbieren.

Des Weiteren ist in der Figur 1 dargestellt, dass der Statorträger 12 an den axialen Enden E1, E2 (zwischen dem jeweiligen Ende S1, S2 des Stators 11 und der jeweiligen Verbindungsstelle V1, V2) optional mehrere umfangsseitig bzw. kragenförmig angeordnete Schalldämmelemente 15 in Form von Stanzlöchern aufweist. Die Stanzlöcher 15 sorgen dabei dafür, dass die Ausbreitung von Schallgeräuschen vom Stator 11 zum Gehäuse 13 besser vermindert wird. Alternativ kann es gemäß der Erfindung möglich sein, unterschiedliche Arten von Schalldämmelementen 15, wie beispielsweise elastische Ringe und/oder Noppen zwischen dem Statorträger 12 und dem Gehäuse 13 vorzusehen. Auch ist es denkbar, dass die Schalldämmung durch eine variable Dicke des Statorträgers 12 entsprechend eingestellt werden kann. Hierbei ist es denkbar, dass an den axialen Enden E1, E2 der Statorträger 12 verjüngt werden kann, um eine leichtere Verbindung mit dem Gehäuse 13 herzustellen.

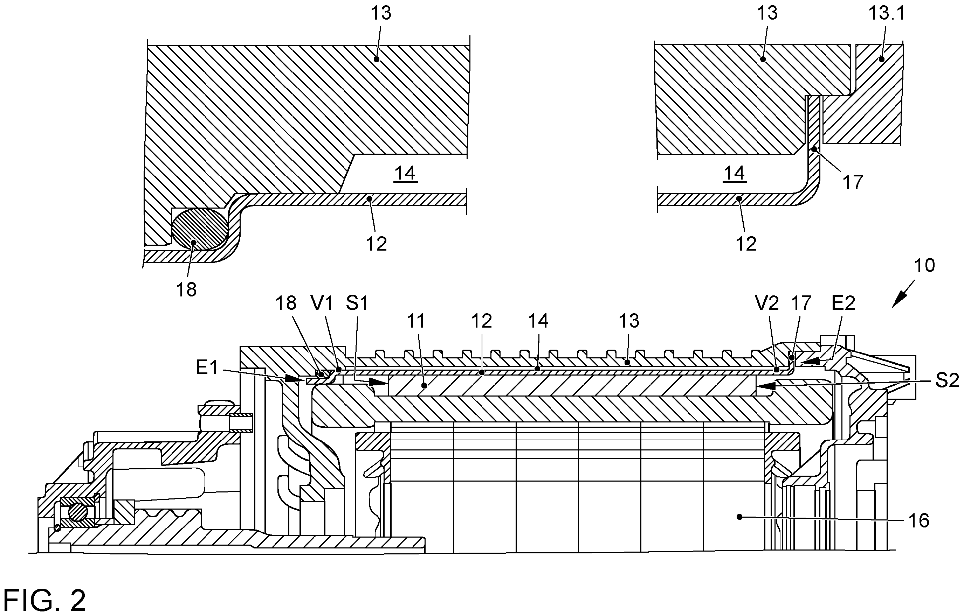

Ferner zeigt die Figur 2 und eine vergrößerte Darstellung der Figur 2 oben rechts, dass der Statorträger 12 gemäß einer weiteren möglichen Ausführungsform der Erfindung mindestens ein abgewinkeltes Kragenelement 17 aufweisen kann, welches zum Verbinden des Statorträgers 12 mit dem Gehäuse 13 dienen kann. In dem dargestellten Ausführungsbeispiel der Figur 2 wird das Kragenelement 17 zwischen dem Gehäuse 13 und einem Gehäusedeckel 13.1 verspannt.

Zudem zeigt die Figur 2 und eine vergrößerte Darstellung der Figur 2 oben links, dass der Statorträger 12 optional mit mindestens einem kragenförmigen Dichtungselement 18 an mindestens einem axialen Ende E1 ausgeführt sein kann, um den Hohlraum 14 zwischen dem Statorträger 12 und dem Gehäuse 13 zusätzlich abzudichten. Hierbei ist das Dichtungselement 18 in Form eines Dichtungsringes 18 ausgebildet.

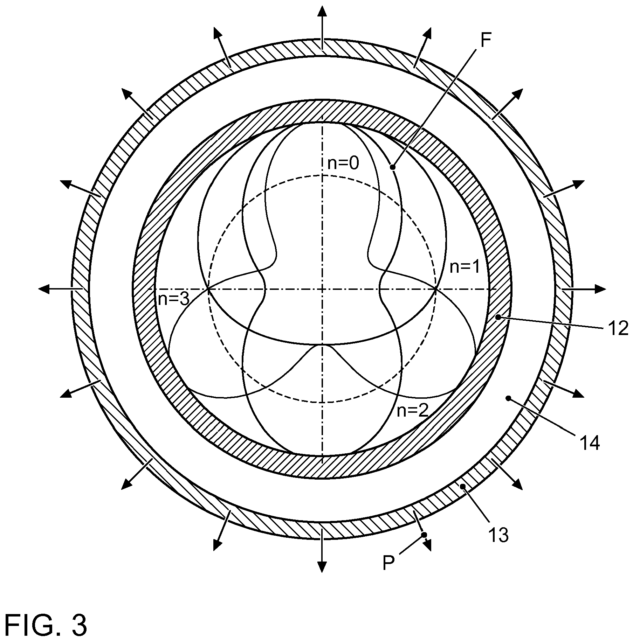

Wie in der Figur 3 verdeutlicht ist, ist zwischen dem Statorträger 12 und dem Gehäuse 13 ein, insbesondere abgeschlossener, Hohlraum 14 gebildet, welcher zur Aufnahme einer Kühlflüssigkeit gegebenenfalls anteilig mit Luft geeignet ist. Die Luft kann dabei dafür sorgen, dass die Schallgeschwindigkeit eines den Hohlraum 14 durchströmenden Kühlmittels durch die anteilig vorhandene Luft reduziert wird. Dadurch kann die Funktionalität der Statoranordnung 11 erhöht werden, indem der Hohlraum 14 vorteilhafterweise im Sinne der Erfindung ausgenutzt werden kann. Hierbei kann es vorteilhaft sein, dass eine Abdichtung des Hohlraumes 14 bereits durch die erfindungsgemäße Verbindung V1, V2 des Statorträgers 12 mit dem Gehäuse 13 stattfinden kann, oder dass zusätzlich ein Dichtungselement 18, wie in der Figur 2 gezeigt ist, vorgesehen sein kann.

Wie weiterhin in der Schnittdarstellung der Figur 3 zu sehen ist, ist der Statorträger 12 als ein dünnwandiger Zylinder, insbesondere im Vergleich zu seinem Durchmesser, ausgebildet. Ferner ist in der Figur 3 erkennbar, dass das Gehäuse 13 ebenfalls als ein dünnwandiger Zylinder, insbesondere im Vergleich zum Durchmesser des Gehäuses 12, ausgebildet ist. Hierbei sollte es klar sein, dass der gewählte Maßstab der Figur 3 rein beispielhaft ist und dass die Dicke des Statorträgers 12 und des Gehäuses 13 je nach erforderter Schallübertragung bzw. -dämmung variieren und/oder, wie nachfolgend beschrieben wird, eingestellt werden können.

Die Erfindung schlägt außerdem ein Verfahren zum Optimieren einer Statoranordnung 10 vor, bei dem eine optimale Dicke des Statorträgers 12 und/oder eine optimale Dicke des Gehäuses 13 für eine gewünschte Schallübertragung vom Stator 11 zum Gehäuse 13 eingestellt werden kann. Hierzu sieht das erfindungsgemäße Verfahren folgende Schritte vor:
- Berechnen einer Kraftanregung durch Magnetdruck im Statorträger,
- Berechnen einer Kraftanregung im Gehäuse,
- Berechnen von Eigenfrequenzen der, insbesondere über ein Kühlmittel, gekoppelten Statoranordnung,
- Berechnen einer Dicke des Statorträgers und/oder einer Dicke des Gehäuses für eine gewünschte Schallübertragung vom Statorträger zum Gehäuse.

Hierbei kann im ersten Schritt eine Kraftanregung durch Magnetdruck im Statorträger 12, beispielsweise durch Modellierung einer Bewegungsgleichung der Zylinderschale, berechnet werden. Da die Ströme in jeweiligen Spulen in Stator 11 und Rotor 16 bekannt sind, kann das Magnetfeld F bzw. seine Moden n=0, n=1, n=2, n=3 und so weiter bestimmt werden. Im Schritt 2 kann ferner die Schallabstrahlung bzw. das Druckfeld P aus Oberflächengeschwindigkeit im Gehäuse 13 berechnet werden, beispielsweise durch Modellierung einer Wellengleichung des Geschwindigkeitspotentials. Die Schallübertragung vom Statorträger 12 zum Gehäuse 13 kann dabei aus der Kraftanregung im Gehäuse 13 im Verhältnis (P=A^{∗}F) zur Kraftanregung im Statorträger 12 berechnet werden. Die Kopplung der Bewegungsgleichungen der Zylinderschalen des Gehäuses 13 und des Statorträgers 12 mit einer Bewegungsgleichung des Kühlmittels kann über gemeinsame Randbedingungen erfolgen. Es ergeben sich daraus auch entsprechende Eigenfrequenzen des gekoppelten Systems bzw. der Statoranordnung 10. Mit Hilfe des erfindungsgemäßen Verfahrens können folglich optimale geometrische Abmaßen für den Statorträger 12 und das Gehäuse 3 berechnet werden.

Die voranstehende Beschreibung der Figuren 1 bis 3 beschreibt die vorliegende Erfindung ausschließlich im Rahmen von Beispielen. Selbstverständlich können einzelne Merkmale der Ausführungsformen, sofern es technisch sinnvoll ist, frei miteinander kombiniert werden, ohne den Rahmen der Erfindung zu verlassen. Die Erfindung ist definiert durch die beigefügten Ansprüche.

### Bezugszeichenliste

- 10: Statoranordnung
- 11: Stator
- 12: Statorträger
- 13: Gehäuse
- 13.1: Gehäusedeckel
- 14: Hohlraum zwischen dem Statorträger und dem Gehäuse
- 15: Schalldämmelement
- 16: Rotor
- 17: Kragenelement
- 18: Dichtungselement

- E1: erstes axiales Ende des Statorträgers
- E2: zweites axiales Ende des Statorträgers
- F: Magnetfeld
- P: Druckfeld
- V1: erste Verbindungsstelle zwischen dem Statorträger und dem Gehäuse
- V2: zweite Verbindungsstelle zwischen dem Statorträger und dem Gehäuse
- S1: erstes axiales Ende des Stators
- S2: zweites axiales Ende des Stators

- n: Schwingungsmoden 1 bis 3

## Patentansprüche

1. Statoranordnung (10) für eine elektrische Maschine, mit
einem Stator (11),
einem Statorträger (12) zur Aufnahme des Stators (11),
und einem Gehäuse (13) zur Aufnahme des Statorträgers (12),
wobei der Statorträger (12) an beiden axialen Enden (E1, E2) den Stator (11) in der Länge überragt,
wobei die beiden axialen Enden (E1, E2) des Statorträgers (12) zur Verbindung mit dem Gehäuse (13) ausgeführt sind,
wobei das mindestens eine axiale Ende (E1, E2) des Statorträgers (12) und das Gehäuse (13) durch Verklemmen und Schrumpfen verbunden sind, **dadurch gekennzeichnet, dass** die Verbindung zwischen dem Gehäuse (13) und dem Statorträger (12) ohne zusätzliche Befestigungs-Bauteile oder Umformen vom Statorträger (12) hergestellt ist, und dass der Statorträger (12) als ein dünner und gerader Blechzylinder ausgeführt ist.

2. Statoranordnung (10) nach Anspruch 1,
**dadurch gekennzeichnet,**
**dass** der Statorträger (12) als ein dünnwandiger Zylinder, insbesondere im Vergleich zum Durchmesser des Statorträgers (12), ausgebildet ist,
insbesondere dass der Statorträger (12) aus Stahl oder Aluminium, insbesondere durch Tiefziehen, Strangpressen oder Ausrollen, hergestellt ist.

3. Statoranordnung (10) nach Anspruch 1 oder 2,
**dadurch gekennzeichnet,**
**dass** das Gehäuse (13) als ein dünnwandiger Zylinder, insbesondere im Vergleich zum Durchmesser des Gehäuses (13), ausgebildet ist,
insbesondere dass das Gehäuse (13) aus Aluminium hergestellt ist.

4. Statoranordnung (10) nach einem der vorgenannten Ansprüche,
**dadurch gekennzeichnet,**
**dass** der Statorträger (12) als ein ausschließlich gerader Kreiszylinder ausgeführt ist.

5. Statoranordnung (10) nach einem der vorgenannten Ansprüche,
**dadurch gekennzeichnet,**
**dass** zwischen dem Statorträger (12) und dem Gehäuse (13) ein, insbesondere abgeschlossener, Hohlraum (14) für ein Kühlmittel vorgesehen ist,
insbesondere dass der Hohlraum (14) zwischen dem Statorträger (12) und dem Gehäuse (13), zumindest anteilig, mit Luft gefüllt ist.

6. Statoranordnung (10) nach einem der vorgenannten Ansprüche,
**dadurch gekennzeichnet,**
**dass** der Statorträger (12) zumindest an einem axialen Ende (E1, E2) mindestens ein Schalldämmelement (15) aufweist, um die Ausbreitung von Schallgeräuschen vom Stator (11) zum Gehäuse (13) zu reduzieren,
insbesondere dass das mindestens eine Schalldämmelement (15) in Form eines Loches, beispielsweise eines Stanzloches, (15) im Statorträger (12) ausgebildet ist.

7. Statoranordnung (10) nach einem der vorgenannten Ansprüche,
**dadurch gekennzeichnet,**
**dass** der Statorträger (12) zumindest an einem axialen Ende (E1, E2) eine Vielzahl von Schalldämmelementen (15), insbesondere eine Vielzahl von Löchern (15), aufweist,
insbesondere dass die Vielzahl von Schalldämmelementen (15) oder Löchern (15) ringförmig und/oder kragenförmig angeordnet ist.

8. Statoranordnung (10) nach Anspruch 6 oder 7,
**dadurch gekennzeichnet,**
**dass** das mindestens eine Schalldämmelement (15) oder die Vielzahl von Schalldämmelementen (15) zwischen einer Verbindungsstelle (V1, V2) des Statorträgers (12) zum Gehäuse (13) und einem Ende (S1, S2) des Stators (11) angeordnet ist.

9. Elektrische Maschine mit einer Statoranordnung (10) nach einem der vorgenannten Ansprüche.

10. Verfahren zum Optimieren einer Statoranordnung (10) für eine elektrische Maschine, insbesondere nach einem der Ansprüche 1 bis 8,
wobei die Statoranordnung (10) einen Statorträger (12) zur Aufnahme des Stators (11) und ein Gehäuse (13) zur Aufnahme des Statorträgers (12) aufweist, wobei der Statorträger (12) an beiden axialen Enden (E1, E2) den Stator (11) in der Länge überragt, wobei die beiden axialen Enden (E1, E2) des Statorträgers (12) zur Verbindung mit dem Gehäuse (13) ausgeführt sind
wobei
das mindestens eine axiale Ende (E1, E2) des Statorträgers (12) und das Gehäuse (13) durch Verklemmen und Schrumpfen verbunden werden, **dadurch gekennzeichnet, dass** die Verbindung zwischen dem Gehäuse (13) und dem Statorträger (12) ohne zusätzliche Befestigungs-Bauteile oder Umformen vom Statorträger (12) hergestellt wird, dass der Statorträger (12) als ein dünner und gerader Blechzylinder ausgeführt ist, und dass das Verfahren folgende Schritte umfasst:
- Berechnen einer Kraftanregung durch Magnetdruck im Statorträger (12),
- Berechnen einer Kraftanregung im Gehäuse (13),
- Berechnen von Eigenfrequenzen der, insbesondere über ein Kühlmittel, gekoppelten Statoranordnung (10),
- Berechnen einer Dicke des Statorträgers (12) und/oder einer Dicke des Gehäuses (13) für eine gewünschte Schallübertragung vom Statorträger (12) zum Gehäuse (13).

## Claims

1. Stator arrangement (10) for an electric machine, having
a stator (11),
a stator carrier (12) for holding the stator (11), and a housing (13) for holding the stator carrier (12),
wherein the stator carrier (12) projects, at both axial ends (E1, E2), lengthwise beyond the stator (11),
wherein the two axial ends (E1, E2) of the stator carrier (12) are designed for connection to the housing (13),
wherein the at least one axial end (E1, E2) of the stator carrier (12) and the housing (13) are connected by clamping and shrink-fitting, **characterized in that**
the connection between the housing (13) and the stator carrier (12) is produced by the stator carrier (12) without additional fastening components or deformation, and **in that** the stator carrier (12) is designed as a thin and straight sheet-metal cylinder.

2. Stator arrangement (10) according to claim 1,
**characterized in that**
the stator carrier (12) is formed as a thin-walled cylinder, in particular in relation to the diameter of the stator carrier (12),
in particular **in that** the stator carrier (12) is produced from steel or aluminium, in particular by being deep-drawn, extruded or rolled out.

3. Stator arrangement (10) according to claim 1 or 2,
**characterized in that**
the housing (13) is formed as a thin-walled cylinder, in particular in relation to the diameter of the housing (13),
in particular **in that** the housing (13) is produced from aluminium.

4. Stator arrangement (10) according to any of the preceding claims,
**characterized in that**
the stator carrier (12) is designed as an exclusively straight circular cylinder.

5. Stator arrangement (10) according to any of the preceding claims,
**characterized in that**
an in particular closed-off cavity (14) for a coolant is provided between the stator carrier (12) and the housing (13),
in particular **in that** the cavity (14) between the stator carrier (12) and the housing (13) is, at least partially, filled with air.

6. Stator arrangement (10) according to any of the preceding claims,
**characterized in that**
the stator carrier (12) has, at least at one axial end (E1, E2), at least one sound-deadening element (15) for reducing the propagation of sound from the stator (11) to the housing (13),
in particular **in that** the at least one sound-deadening element (15) is in the form of a hole, for example a punched hole (15), in the stator carrier (12).

7. Stator arrangement (10) according to any of the preceding claims,
**characterized in that**
the stator carrier (12) has, at least at one axial end (E1, E2), a multiplicity of sound-deadening elements (15), in particular a multiplicity of holes (15),
in particular **in that** the multiplicity of sound-deadening elements (15) or holes (15) is arranged in a ring-shaped and/or collar-shaped manner.

8. Stator arrangement (10) according to claim 6 or 7,
**characterized in that**
the at least one sound-deadening element (15) or the multiplicity of sound-deadening elements (15) is arranged between a connecting point (V1, V2) of the stator carrier (12) to the housing (13) and an end (S1, S2) of the stator (11) .

9. Electric machine having a stator arrangement (10) according to any of the preceding claims.

10. Method for optimizing a stator arrangement (10) for an electric machine, in particular according to any of claims 1 to 8,
wherein the stator arrangement (10) has a stator carrier (12) for holding the stator (11) and a housing (13) for holding the stator carrier (12), wherein the stator carrier (12) projects, at both axial ends (E1, E2), lengthwise beyond the stator (11), wherein the two axial ends (E1, E2) of the stator carrier (12) are designed for connection to the housing (13), wherein the at least one axial end (E1, E2) of the stator carrier (12) and the housing (13) are connected by clamping and shrink-fitting, **characterized in that**
the connection between the housing (13) and the stator carrier (12) is produced by the stator carrier (12) without additional fastening components or deformation, **in that** the stator carrier (12) is designed as a thin and straight sheet-metal cylinder, and **in that** the method comprises the following steps:
- calculating an excitation of force by magnetic pressure in the stator carrier (12),
- calculating an excitation of force in the housing (13),
- calculating Eigenfrequencies of the stator arrangement (10) which is coupled in particular via a coolant,
- calculating a thickness of the stator carrier (12) and/or a thickness of the housing (13) for a desired transmission of sound from the stator carrier (12) to the housing (13).

## Revendications

1. Assemblage statorique (10) d'une machine électrique, avec :
un stator (11) ;
un support de stator (12) destiné à recevoir le stator (11) ; et
un carter (13) destiné à recevoir le support de stator (12) ;
le support de stator (12) dépassant le stator (11) dans la longueur au niveau des deux extrémités axiales (E1, E2) ;
les deux extrémités axiales (E1, E2) du support de stator (12) étant réalisées de façon à être reliées au carter (13) ;
l'au moins une extrémité axiale (E1, E2) du support de stator (12) et du carter (13) étant reliée par serrage et contraction ;
**caractérisé en ce que** la liaison entre le carter (13) et le support de stator (12) est fabriquée sans composant de fixation supplémentaire ou sans déformation du support de stator (12) et que le support de stator (12) est réalisé sous la forme d'un cylindre de tôle fin et droit.

2. Assemblage statorique (10) selon la revendication 1,
**caractérisé en ce que** :
le support de stator (12) est réalisé sous la forme d'un cylindre à paroi mince, notamment par rapport au diamètre du support de stator (12) ;
le support de stator (12) étant notamment fabriqué en acier ou en aluminium, notamment par emboutissage, extrusion ou déroulement.

3. Assemblage statorique (10) selon la revendication 1 ou 2,
**caractérisé en ce que** :
le carter (13) est réalisé sous la forme d'un cylindre à paroi mince, notamment par rapport au diamètre du carter (13) ;
le carter (13) étant notamment fabriqué en aluminium.

4. Assemblage statorique (10) selon l'une quelconque des revendications précédentes,
**caractérisé en ce que**
le support de stator (12) est exclusivement réalisé sous la forme d'un cylindre circulaire droit.

5. Assemblage statorique (10) selon l'une quelconque des revendications précédentes, **caractérisé en ce que** :
un espace creux (14) notamment fermé, est prévu entre le support de stator (12) et le carter (13) pour un moyen de refroidissement ;
l'espace creux (14) étant notamment rempli au moins en partie d'air entre le support de stator (12) et le carter (13).

6. Assemblage statorique (10) selon l'une quelconque des revendications précédentes,
**caractérisé en ce que** :
le support de stator (12) comporte au moins un élément insonorisant (15) au niveau d'au moins une extrémité axiale (E1, E2) pour réduire la diffusion des bruits acoustiques transmis du stator (11) au carter (13) ;
l'au moins un élément insonorisant (15) étant notamment réalisé sous la forme d'un trou, par exemple d'un trou estampé (15) dans le support de stator (12).

7. Assemblage statorique (10) selon l'une quelconque des revendications précédentes,
**caractérisé en ce que** :
le support de stator (12) comporte une pluralité d'éléments insonorisants (15), notamment une pluralité de trous (15), au moins au niveau d'une extrémité axiale (E1, E2) ;
la pluralité d'éléments insonorisants (15) ou de trous (15) étant notamment disposés en forme de bague et/ou de col.

8. Assemblage statorique (10) selon la revendication 6 ou 7,
**caractérisé en ce que**
l'au moins un élément insonorisant (15) ou la pluralité d'éléments insonorisants (15) sont disposés entre un point de jonction (V1, V2) du support de stator (12) par rapport au carter (13) et une extrémité (S1, S2) du stator (11).

9. Machine électrique avec un assemblage statorique (10) selon l'une quelconque des revendications précédentes.

10. Procédé d'optimisation d'un assemblage statorique (10) pour une machine électrique, notamment selon l'une quelconque des revendications 1 à 8 :
l'assemblage statorique (10) comportant un support de stator (12) destiné à recevoir le stator (11) et un carter (13) destiné à recevoir le support de stator (12), le support de stator (12) dépassant le stator (11) dans la longueur au niveau des deux extrémités axiales (E1, E2) ;
les deux extrémités axiales (E1, E2) du support de stator (12) étant réalisées de façon à être reliées au carter (13) ;
l'au moins une extrémité axiale (E1, E2) du support de stator (12) et du carter (13) étant reliées par serrage et contraction ;
**caractérisé en ce que** :
la liaison entre le carter (13) et le support de stator (12) est réalisée sans composant de fixation supplémentaire ou déformation du support de stator (12) ;
le support de stator (12) est réalisé sous la forme d'un cylindre de tôle fin et droit ; et
le procédé comprend les étapes suivantes :
- calcul d'une stimulation de force par pression magnétique exercée dans le support de stator (12) ;
- calcul d'une stimulation de force exercée dans le carter (13) ;
- calcul de fréquences propres d'un assemblage statorique (10) couplé notamment au moyen de refroidissement ;
- calcul d'une épaisseur du support de stator (12) et/ou d'une épaisseur du carter (13) pour une transmission de bruit souhaitée du support de stator (12) au carter (13).
